# EUROPÄISCHE PATENTSCHRIFT

(11) **EP 1 300 427 B1**
(45) Veröffentlichungstag und Bekanntmachung des Hinweises auf die Patenterteilung: **28.01.2009**
(21) Anmeldenummer: 02019606.9
(22) Anmeldetag: 03.09.2002
(51) Int. Cl.: C08F 220/12, C09J 133/06

(54) **UV-vernetzbare Acrylathaftschmelzhaftkleber mit enger Molekulargewichtsverteilung**
UV-curable acrylates hot-melt adhesifs with narrow molecular weight distribution
Adhésifs acrylates thermofusibles et durcissables par rayons UV à répartition de poids moleculaire étroite

(30) Priorität: 05.10.2001 DE 10149084
(43) Veröffentlichungstag der Anmeldung: 09.04.2003
(73) Patentinhaber: tesa AG, 20253 Hamburg (DE)
(72) Erfinder: Husemann, Marc, Dr., 22605 Hamburg (DE); Zöllner, Stephan, Dr., 21244 Buchholz/Nordheide (DE)

(56) Entgegenhaltungen:
- EP-A- 0 377 199
- WO-A-01/98383
- WO-A-97/34935
- WO-A-99/62961

## Beschreibung

Die Erfindung betrifft eine Polyacrylathaftklebemasse, ein Verfahren zur Herstellung einer derartigen Haftklebemasse sowie die Verwendung derartiger Haftklebemassen.

Für industrielle Haftklebeband-Anwendungen werden sehr häufig Polyacrylathaftklebemassen eingesetzt. Polyacrylate besitzen diverse Vorteile gegenüber anderen Elastomeren. Sie sind sehr stabil gegenüber UV-Licht, Sauerstoff und Ozon. Synthetische und Naturkautschukklebemassen enthalten zumeist Doppelbindungen, die diese Klebemassen gegen die vorher genannten Umwelteinflüsse labil machen. Ein weiterer Vorteil von Polyacrylaten ist ihre Transparenz und ihre Einsatzfähigkeit in einem relativ weiten Temperaturbereich.

Polyacrylathaftklebemassen werden in der Regel in Lösung durch eine freie radikalische Polymerisation hergestellt. Die Polyacrylate werden generell in Lösung über einen Streichbalken auf das entsprechende Trägermaterial beschichtet und anschließend getrocknet. Zur Steigerung der Kohäsion wird das Polymer vernetzt. Die Härtung verläuft thermisch oder durch UV-Vernetzung oder durch ES-Härtung (ES: Elektronenstrahlung). Der beschriebene Prozeß ist relativ kostenaufwendig und ökologisch bedenklich, da das Lösemittel in der Regel nicht recycelt wird und ein hoher Verbrauch an organischen Lösemitteln eine hohe Umweltbelastung bedeutet.

Weiterhin ist es sehr schwierig, Haftklebebänder mit hohem Masseauftrag blasenfrei herzustellen.

Eine Verbesserung dieser Nachteile bedeutet der Heißschmelz-Prozeß (Hotmelt-Prozeß). Hier wird der Haftkleber in der Schmelze auf das Trägermaterial aufgetragen.

Mit dieser neuen Technik sind aber auch Einschränkungen verbunden. Vor der Beschichtung wird der Haftklebemasse das Lösemittel in einem Trocknungsextruder entzogen. Der Trocknungsprozeß ist mit einer relativ hohen Temperatur und Schereinwirkung verbunden, so daß besonders hochmolekulare Polyacrylathaftklebemassen stark geschädigt werden. Die Acrylathaftklebemasse vergelt oder der niedermolekulare Anteil wird durch Molekulargewichtsabbau stark angereichert wird. Beide Effekte sind unerwünscht, da sie für die Anwendung nachteilig sind. Die Klebemasse läßt sich entweder nicht mehr beschichten oder die klebtechnischen Eigenschaften der Haftklebemasse verändern sich, da z.B. bei Einwirken einer Scherkraft auf die Klebmasse die niedermolekularen Anteile als Gleitmittel wirken und so zu einem vorzeitigen Versagen der Klebemasse führen.

Eine Lösung zur Verminderung dieser Nachteile bieten Polyacrylatklebemassen mit niedrigem mittleren Molekulargewicht und enger Molekulargewichtsverteilung. Hier wird der Anteil an niedermolekularen und hochmolekularen Molekülen in dem Polymer durch den Polymerisationsprozeß stark vermindert. Durch den Wegfall der hochmolekularen Anteile verringert sich die Fließviskosität, und die Masse zeigt eine geringere Tendenz zur Vergelung. Durch die Absenkung des niedermolekularen Anteils wird die Anzahl der Oligomere verringert, die die Scherfestigkeit der Haftklebemasse verringern.

Ein weiterer Nachteil niedermolekularerer Acrylathaftklebemassen ist die geringere Vernetzungstendenz. Kurze Polymerketten lassen sich in der Regel weniger effizient vernetzen, da die Wahrscheinlichkeit geringer ist, dass ein Polymerradikal ein zweite Polymerkette trifft. Zur Steigerung der Verentzungseffizienz benötigt man daher Promotoren.

Zur Herstellung von niedermolekularen Haftklebemassen sind verschiedene Polymerisationsmethoden geeignet. Stand der Technik ist der Einsatz von Reglern, wie z.B. von Alkoholen oder Thiolen (Makromoleküle, Hans-Georg Elias, 5. Auflage, 1990, Hüthig & Wepf Verlag Basel). Diese Regler reduzieren das Molekulargewicht, aber verbreitern die Molekulargewichtsverteilung.

Als eine weitere kontrollierte Polymerisationsmethode wird die Atom Transfer Radical Polymerization ATRP eingesetzt, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Cu-, Ag- oderAu-Komplexe [EP 0 824 111; EP 0 826 698; EP 0 824 110; EP 0 841 346; EP 0 850 957] eingesetzt werden. Die unterschiedlichen Möglichkeiten der ATRP sind ferner in den US 5,945,491, US 5,854,364 und US 5,789,487 beschrieben. Generell werden Metallkatalysatoren eingesetzt, die als Nebenwirkung die Alterung der Haftklebemassen negativ beeinflussen (Vergelung, Umesterung). Zudem sind die meisten Metallkatalysatoren giftig, verfärben die Klebemasse und lassen sich nur durch aufwendige Fällungen aus dem Polymer entfernen.

In der US 4,581,429 wird ein kontrolliertes radikalisches Polymerisationsverfahren offenbart. Das Verfahren wendet als Initiator eine Verbindung der Formel R'R"N-O-X an, worin X eine freie radikalische Spezies darstellt, die ungesättigte Monomere polymerisieren kann. Die Reaktionen weisen aber im allgemeinen geringe Umsatzraten aus. Besonders problematisch ist die Polymerisation von Acrylaten, die nur zu sehr geringen Ausbeuten und Molekulargewichten abläuft.

In der WO 98/13392 werden offenkettige Alkoxyamin-Verbindungen beschrieben, die ein symmetrisches Substitutionsmuster aufweisen. Die EP 0 735 052 A1 offenbart ein Verfahren zur Herstellung thermoplastischer Polymere mit engen Polydispersitäten.

Die WO 96/24620 beschreibt ein Polymerisationsverfahren, bei dem sehr spezielle Radikalverbindungen, wie z.B. Phosphor-enthaltende Nitroxide, beschrieben werden.

Die WO 98/30601 offenbart spezielle Nitroxyle, die auf Imidazolidin basieren.

Die WO 98/44008 offenbart spezielle Nitroxyle, die auf Morpholinen, Piperazinonen und Piperazindionen basieren.

Die DE 199 49 352 A1 offenbart heterocyclische Alkoxyamine als Regulatoren in kontrollierten radikalischen Polymerisationen.

Entsprechende Weiterentwicklungen der Alkoxyamine bzw. der korrespondierenden freien Nitroxide verbesserten die Effizienz zur Herstellung von Polyacrylaten. [Hawker, C.J. Vortrag, Hauptversammlung der American Chemical Society in San Francisco, Frühjahr 1997; Husemann, M., IUPAC World-Polymer Meeting 1998, Gold Coast, Australien, Vortrag über "Novel Approaches to Polymeric Brushes using 'Living' Free Radical Polymerizations" (Juli 1998)]

In den vorstehend erwähnten Patenten bzw. Vorträgen wurde versucht, die Steuerung von radikalischen Polymerisationsreaktionen zu verbessern. Dennoch besteht der Bedarf für ein Nitroxid-gesteuertes Polymerisationsverfahren, welches hoch reaktiv ist und mit dem sich hohe Umsätze bei gleichzeitig hohem Molekulargewicht und niedriger Polydispersität realisieren lassen. Diese Anforderungen wurden in DE 100 36 801.8 erfüllt.

Dennoch wird durch diesen Typ von Verbindungen nicht die Vernetzungseffizienz gefördert. Vielmehr wirken Nitroxide im allgemeinen als C-Radikalfänger und besitzen somit eine Vernetzungs-hemmende Wirkung.

Von der BASF AG werden UV AC-Resins™ angeboten, die copolymerisierbare Photoinitatoren auf Benzophenon-Basis enthalten. Auf diesem Weg sind die Photoinitiatoren am Polymer gebunden, sind nicht flüchtig und lassen sich durch die Bindung zum Polymer gut UV-vernetzen. Ein ähnlicher Weg wurde durch Guse (Patent US 4,144,157) beschritten. Diese Acrylathaftklebemassen sind gut UV-vernetzbar und als Hotmelt zu verarbeiten, besitzen jedoch durch die breite Molekulargewichtsverteilung keine guten klebtechnischen Eigenschaften.

Eine weitere Variante ist der RAFT-Prozeß (Reversible Addition-Fragmentation Chain Transfer). Der Prozeß ist in den WO 9801478 und WO 9931144 ausführlich beschrieben, eignet sich jedoch in der dort dargestellten Art und Weise nicht zur Herstellung von Haftklebemassen, da die erzielten Umsätze sehr gering sind und das mittlere Molekulargewicht der hergestellten Polymere zu niedrig für Acrylathaftklebemassen ist. Die beschriebenen Polymere lassen sich somit nicht als Acrylathaftklebemassen einsetzen. Ein Verbesserung wurde mit dem von BDF in DE 100 30 217.3 beschriebenen Prozess erreicht. Das oben beschriebene Verfahren lässt sich aber nicht zur UV-Vernetzung einsetzen, da die beschriebenen Verbindungen ebenfalls eine radikalfangende Wirkung besitzen, so dass die Vernetzungseffizienz nach Zugabe des freien UV-Photoinitiators zu gering ist. Weiterhin steht zu befürchten, dass die oben genannten Verbindungstypen über einen längeren Zeitraum - wie z.B. in einem Hotmelt-Prozess gegeben - nicht stabil sind und zerfallen würden.

Es verbleibt demnach als zentrales Problem die effiziente UV-Vernetzung engverteilter Acrylathaftklebemassen zur Herstellung verbesserter Acrylathaftklebemassen.

Aufgabe der Erfindung ist es daher, eine Polyacrylatmasse zur Verfügung zu stellen, welche im Hotmeltverfahren sehr gut verarbeitbar und danach sehr gut vernetzbar ist, sowie ein Verfahren zur Herstellung derartiger UV-vernetzbarer Acrylatschmelzhaftklebern zur Verfügung zu stellen, welches die Nachteile des genannten Standes der Technik nicht oder nur in vermindertem Umfang aufweist.

Überraschenderweise wurde gefunden, daß sich engverteilte Polyacrylatschmelzhaftkleber mit copolymerisierten Photoinitiatoren sehr gut im Schmelzprozess verarbeiten und durch UV-Vernetzung sehr effizient vernetzen lassen, und daß sich diese in einem besonders geregelten Verfahren hervorragend herstellen lassen.

Anspruch 1 betrifft daher eine Polyacrylathaftklebemasse, welche ein mittleres Molekulargewicht M_{w} (Gewichtsmittel) von 100.000 bis 600.000 g/mol aufweist, eine Polydispersität von nicht mehr als 3,0 besitzt sowie einpolymerisierte Photoinitiatoreinheiten besitzt.

Dabei ist es für die Eigenschaften der Polyacrylathaftklebemasse sehr von Vorteil, wenn eines oder mehrere Harze beigemischt sind, bevorzugt in Anteilen von bis 50 Gew.-%, sehr bevorzugt von 20 bis 40 Gew.-%.

Weiterhin ist es vorteilhaft, Additive wie Alterungsschutzmittel, Lichtschutzmittel, Ozonschutzmittel, Fettsäuren, Weichmacher, Keimbildner, Blähmittel, Beschleuniger, Füllmittel und/oder dergleichen zuzugeben.

Weiterhin betrifft die Erfindung ein Verfahren, welches geeignet ist, wie Polyacrylathaftklebemassen mit einer Polydispersität von nicht mehr als 3,0 herzustellen. Dies geschieht über einen radikalischen Polymerisationsprozeß, in welchem aus einer Monomermischung ein Polymer hergestellt wird, wobei die zu polymerisierende Monomermischung copolymerisierbare Photoinitiatoren enthält und wobei der Polymerisationsprozeß durch die Anwesenheit zumindest einer chemischen Verbindung enthaltend die Einheit 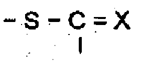 als Polymerisationsregler geregelt wird, wobei X = S, O oder N ist.

Als Polymerisationsregler lassen sich dabei sehr vorteilhaft im erfindersichen Sinne Trithiocarbonate oder Dithioester einsetzen.

In einer Weiterentwicklung des erfinderischen Verfahrens wird das Polymer nach den erfolgten Polymerisation, welche bevorzugt bis zu einem Umsatz von > 98 % betrieben wird, zum Hotmelt aufkonzentriert, wobei das Lösungsmittel bis zu einem maximale Restgehalt von 0.1 % abgezogen wird, so daß das Polymer als Schmelze vorliegt. In einer weiteren Fortentwicklung des Verfahrens wird das Polymer daraufhin aus der Schmelze gelfrei auf einen Träger beschichtet ("gelfrei" bedeutet die Erfüllung der Anforderungen für eine Beschichtbarkeit der Massen mit den üblicherweise verwendeten und dem Fachmann für diese Zwecke geläufigen Beschichtungsapparaturen, insbesondere für eine Beschichtbarkeit, welche sich durch ein gleichmäßiges (homogenes) Beschichtungsbild ohne Inhomogenitäten oder Schlieren auszeichnet, wenn durch die üblicherweise verwendeten Beschichtungsdüsen beschichtet wird).

Sodann ist es vorteilhaft, das Polymer durch UV-Strahlung zu vernetzen, dies geschieht insbesondere nach der Beschichtung auf den Träger. Dabei wird bevorzugt derart vorgegegangen, daß die UV-Vernetzung durch den zugesetzten Polymerisationsregler unterstützt wird.

Zusammenfassend läßt sich folgendes Schema für eine vorteilhafte Vorgehensweise aufstellen.
- Polymerisationsprozeß einer Monomermischung enthaltend neben Monomeren auf (Meth-)Acrylsäurebasis copolymerisierbare Photoinitiatoren.
- wobei durch den Einsatz eines Kontrollreagenzes Polydispersitäten von 1.2 bis 3.5 erzielt werden,
- das Polymer zum Hotmelt aufkonzentriert wird,
- das Polymer für 24 h unter Luftausschluß oder Stickstoffatmosphäre im Hotmelt-Prozess ohne Vergelung verarbeitbar ist,
- das Polymer aus der Schmelze gelfrei beschichtet wird und
- nach der Beschichtung mit UV-Licht vernetzt wird, wobei der zugesetzte Regler die UV-Vernetzung unterstützt und beschleunigt.

Die UV-vernetzende und engverteilte Polyacrylathaftklebemasse besteht bevorzugt aus den folgenden Monomeren
a) Acrylsäureester und/oder Methacrylsäureester bzw. deren freien Säuren mit der folgenden Formel

   CH₂= C(R₁)(COOR₂),

   wobei R₁ = H oder CH₃ und R₂ eine Alkylkette mit 1 - 30 C-Atomen oder H ist, zu 70-99.9 Gew.%, insbesondere 75-99.5 Gew.-%,
b) UV-Photoinitiator mit einer radikalisch zu polymerisierenden Doppelbindung zu 0.1 - 2 Gew.-%, insbesondere 0.4 - 1 Gew.-%
c) olefinisch ungesättigte Monomere mit funktionellen Gruppen, zu 0-30 Gew.%.

In einer sehr bevorzugten Auslegung werden als Monomere a) Acrylmomonere eingesetzt, die Acryl- und Methacrylsäureester mit Alkylgruppen bestehend aus 4 bis 14 C-Atomen, bevorzugt 4 bis 9 C-Atomen umfassen. Spezifische Beispiele, ohne sich durch diese Aufzählung unnötig einschränken zu Wollen, sind n-Butylacrylat, n-Pentylacrylat, n-Hexylacrylat, n-Heptylacrylat, n-Octylacrylat, n-Nonylacrylat, Laurylacrylat, Stearylacrylat, Behenylacrylat, und deren verzweigten Isomere, wie z.B. 2-Ethylhexylacrylat. Weitere Verbindungsklassen, die ebenfalls in geringen Mengen unter a) hinzugesetzt werden können; sind Methylmethacrylate, Cyclohexylmethacrylate und Isobomylmethacrylate.

In einer sehr bevorzugten Auslegung werden für die Monomere b) Photoinitiatoren mit zumindestens einer Vinylverbindung eingesetzt. Die Photoinitiatoren können vom Typ Norrish I oder Norrish II sein. Die Photoinitiatoren beinhalten dabei als Baustein bevorzugt einen oder mehrere der folgenden Reste: Benzophenon-, Acetophenon-, Benzil-, Benzoin-, Hydroxyalkylphenon-, Phenylcyclohexylketon-, Anthrachinon-, Trimethylbenzoyl phosphin oxid-, Methylthiophenylmorpholinketon-, Aminoketone-, Azobenzoine, Thioxanthon-, Hexarylbisimidazol-, Triazin-, oder Fluorenon, wobei jeder dieser Reste zusätzlich mit einem oder mehreren Halogenatomen und/oder einer oder mehreren Alkoxygruppen und/oder einer oder mehreren Aminogruppen und/oder Hydroxygruppen substituiert sein kann. Ein repräsentativer Überblick wird in "Photoinitiation Photopolymerization and Photocuring, Fundamentals and Applications, von J.-P. Fouassier, Hanser Publishers, München, Wien , New York 1995" gegeben. Ergänzend kann betrachtet werden "Chemistry & Technology of UV & EB formulation for Coatings, Inks & Paints, Volume 5, A. Carroy, C. Decker, J.P. Dowling, P. Pappas, B. Monroe, ed. By P.K.T. Oldring, publ. By SITA Technology, London, England 1994".
Konkrete Beispiele, ohne sich dadurch unnötig einschränken zu wollen, sind acryliertes Benzophenon, wie z.B. Ebecryl P 36™ der Fa. UCB, oder Benzoinacrylat.

In einer sehr bevorzugten Auslegung werden als Monomere c) Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril. In einer weiteren sehr bevorzugten Auslegung für die Monomere c) werden Monomere mit folgenden funktionellen Gruppen eingesetzt: Hydroxy-, Carboxy-, Epoxy-, Säureamid-, Isocyanato- oder Aminogruppen.

In einer vorteilhaften Variante werden für c) Acrylmonomere entsprechend der folgenden allgemeinen Formel eingesetzt, 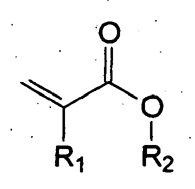 wobei R₁ = H oder CH₃ ist und der Rest -OR₂ die funktionelle Gruppe darstellt oder beinhaltet und z.B. in einer besonders bevorzugten Auslegung eine H-Donor Wirkung besitzt, die die UV-Vernetzung erleichtert.

Besonders bevorzugte Beispiele für die Komponente c) sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Acrylamid und Glyceridylmethacrylat, Benzylacrylat, Benzylmethacrylat, Phenylacrylat, Phenylmethacrylat, t-Butylphenylacrylat, t-Butylaphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat, Cyanoethylmethacrylat, Cyanoethylacrylat, Gycerylmethacrylat, 6-Hydroxyhexylmethacrylat, N-tert.-Butylacrylamid, N-Methylolmethacrylamid, N-(Buthoxymethyl)methacrylamid, N-Methylolacrylamid, N-(Ethoxymethyl)acrylamid, N-Isopropylacrylamid, Vinylessigsäure, Tetrahydrofufurylacrlyat, β-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren bevorzugten Auslegung werden für die Komponente c) aromatische Vinylverbindungen eingesetzt, wobei bevorzugt die aromatischen Kerne aus C₄ bis C₁₈ bestehen und auch Heteroatome enthalten können. Besonders bevorzugte Beispiele sind Styrol, 4-Vinylpyridin, N-Vinylphthalimid, Methylstyrol, 3,4-Dimethoxystyrol, 4-Vinylbenzoesäure, wobei diese Aufzählung nicht abschließend ist.

Zur Polymerisation werden die Monomere dermaßen gewählt, daß die resultierenden Polymere als industriell verwendbare Haftklebemassen eingesetzt werden können, insbesondere derart, daß die resultierenden Polymere haftklebende Eigenschaften entsprechend des "Handbook of Pressure Sensitive Adhesive Technology" von Donatas Satas (van Nostrand, New York 1989) besitzen. Für diese Anwendungen liegt die statische Gtasübergangstemperatur des resultierenden Polymers vorteilhaft unterhalb 25°C liegen.

Zur Polymerisation wird bevorzugt ein Kontrollreagenz der allgemeinen Formel eingesetzt: 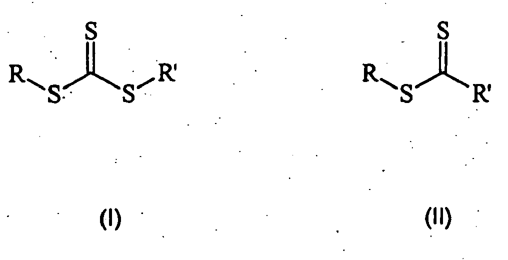 worin
- R und R' unabhängig voneinander gewählt oder gleich sind
   - verzweigte und unverzweigte C₁- bis C₁₈-Alkylreste; C₃- bis C₁₈-Alkenylreste; C₃bis C₁₈-Alkinylreste;
   - H oder C₁- bis C₁₈ Alkxoy
   - durch zumindest eine OH-Gruppe oder ein Halogenatom oder einen Silylether substituierte C₁- bis C₁₈-Alkylreste; C₃- bis C₁₈-Alkenylreste; C₃- bis C₁₈-Alkinylreste;
   - C₂-C₁₈-Hetero-Alkylreste mit mindestens einem O-Atom und/oder einer NR'-Gruppe in der Kohlenstoffkette
   - mit zumindest einer Estergruppe, Amingruppe, Carbonatgruppe, Cyano-, Isocyanato- und/oder Epoxidgruppe und/oder mit Schwefel substituierte C₁-C₁₈-Alkylreste, C₃-C₁₈-Alkenylreste, C₃-C₁₈-Alkinylreste;
   - C₃-C₁₂-Cycloalkylreste
   - C₆-C₁₈- Aryl- oder Benzylreste
   - Wasserstoff
darstellen;

Kontrollreagenzien des Typs (I) bestehen in einer mehr bevorzugten Auslegung aus folgenden Verbindungen:
Halogene sind hierbei bevorzugt F, Cl, Br oder I, mehr bevorzugt Cl und Br. Als Alkyl-, Alkenyl- und Alkinylreste in den verschiedenen Substituenten eignen sich hervorragend sowohl lineare als auch verzweigte Ketten.
Als Beispiele für Alkylreste, welche 1 bis 18 Kohlenstoffatome enthalten, seien Methyl, Ethyl, Propyl, Isopropyl, Butyl, Isobutyl, t-Butyl, Pentyl, 2-Pentyl, Hexyl, Heptyl, Octyl, 2-Ethylhexyl, t-Octyl, Nonyl, Decyl, Undecyl, Tridecyl, Tetradecyl, Hexadecyl und Octadecyl genannt.
Beispiele für Alkenylreste mit 3 bis 18 Kohlenstoffatomen sind Propenyl, 2-Butenyl, 3-Butenyl, Isobutenyl, n-2,4-Pentadienyl, 3-Methyl-2-butenyl, n-2-Octenyl, n-2-Dodecenyl, Isododecenyl und Oleyl.
Beispiele für Alkinyl mit 3 bis 18 Kohlenstoffatomen sind Propinyl, 2-Butinyl, 3-Butinyl, n-2-Octinyl und n-2-Octadecinyl.
Beispiele für Hydroxy-substituierte Alkylreste sind Hydroxypropyl, Hydroxybutyl oder Hydroxyhexyl.
Beispiele für Halogen-substituierte Alkylreste sind Dichlorobutyl, Monobromobutyl oder Trichlorohexyl.
Ein geeigneter C₂-C₁₈-Hetero-Alkylrest mit mindestens einem O-Atom in der Kohlenstoffkette ist beispielsweise -CH₂-CH₂-O-CH₂-CH₃.
Als C₃-C₁₂-Cycloalkylreste dienen beispielsweise Cyclopropyl, Cyclopentyl, Cyclohexyl oder Trimethylcyclohexyl.
Als C₆-C₁₈-Arylreste dienen beispielsweise Phenyl, Naphthyl, Benzyl, 4-tert.-Butylbenzyloder weitere substituierte Phenyl, wie z.B. Ethylbenzol, Toluol, Xylol, Mesitylen, Isopropylbenzol, Dichlorobenzol oder Bromtoluol.
Die vorstehenden Auflistungen dienen nur als Beispiele für die jeweiligen Verbindungsgruppen und besitzen keinen Anspruch auf Vollständigkeit.

Weiterhin sind auch Verbindungen der folgenden Typen als Kontrollreagenzien geeignet 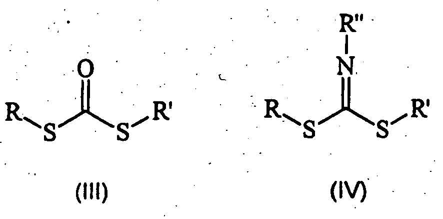 wobei R" die vorstehend genannten Reste R oder R', unabhängig von deren Wahl, umfassen kann.

In einer besonders bevorzugten Ausführungsform der Erfindung werden Verbindungen (la) und (IIa)als Kontrollreagenzien eingesetzt.

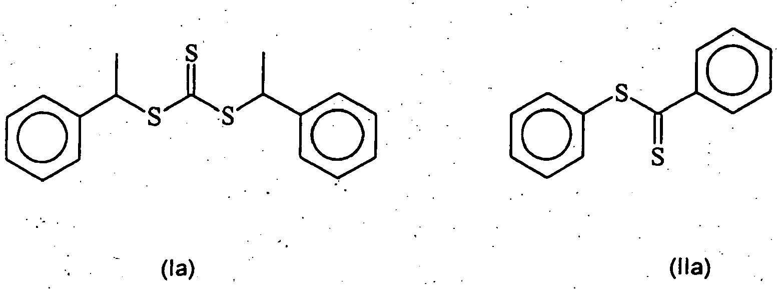

In Verbindung mit den obengenannten kontrolliert radikalisch verlaufenden Polymerisationen werden bevorzugt Initiatorsysteme, die zusätzlich weitere radikalische Initiatoren zur Polymerisation enthalten, insbesondere thermisch zerfallende radikalbildende Azo- oder Peroxo-Initiatoren, eingesetzt. Prinzipiell eignen sich hierfür jedoch alle für Acrylate bekannten üblichen Initiatoren. Die Produktion von C-zentrierten Radikalen ist im Houben Weyl, Methoden der Organischen Chemie, Vol. E 19a, S. 60- 147 beschrieben. Diese Methoden werden in bevorzugter Weise in Analogie angewendet.

Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-tbutylperoxid, Azodiisosäurebutyronitril, Cyclohexylsulfonylacetylperoxid, Diisopropylpercarbonat, t-Butylperoktoat, Benzpinacol. In einer sehr bevorzugten Auslegung wird als radikalischer Initiator 1,1'-Azo-bis-(cyclohexancarbonsäurenitril) (Vazo 88™ der Fa. DuPont) verwendet.

Die mittleren Molekulargewichte M_{w} (Gewichtsmittel) der bei der kontrollierte radikalischen Polymerisation entstehenden Polymere werden derart gewählt, daß sie in einem Bereich von 100.000 bis 600.000 g/mol liegen; speziell für die weitere Verwendung als Schmelzhaftkleber werden Haftklebemassen mit mittleren Molekulargewichten (Gewichtsmittel) M_{w} von 100.000 bis 350.000 g/mol hergestellt. Die Bestimmung des mittleren Molekulargewichtes M_{w} erfolgt über Größenausschlußchromatographie (Gelpermeationschromatographie, GPC) oder Matrix-unterstützte Laser-Desorption/Ionisations-Massenspektrometrie (MALDI-MS).

Die Polymerisation kann in Substanz, in Gegenwart eines organischen Lösungsmittels oder Gemischen aus organischen Lösungsmitteln, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel oder Gemische von Lösungsmitteln sind reine Alkane (Hexan, Heptan, Octan, Isooctan), aromatische Kohlenwasserstoffe (Benzol, Toluol, Xylol), Ester (Essigsäureethylester, Essigsäurepropyl-, -butyl-, oder -hexylester), halogenierte Kohlenwasserstoffe (Chlorbenzol), Alkanole (Methanol, Ethanol, Ethylenglycol, Ethylenglycolmonomethylether) , Ether (Diethylether, Dibutylether) oder Gemische davon. Die wässrigen Polymerisationsreaktionen können mit einem mit Wasser mischbaren oder hydrophilen Colösungsmittel versetzt werden, um zu gewährleisten, daß das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Für die Verwendung der nach dem erfinderischen Verfahren hergestellten Polymere (Polyacrylate) als Haftklebemassen werden diese zur Optimierung optional mit zumindest einem Harz abgemischt. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

In einer weiteren vorteilhaften Weiterentwicklung werden zu den Polyacrylaten ein oder mehrere Weichmacher, wie z.B. niedermolekulare Polyacrylate, Phthalate, Walöweichmacher oder Weichharze hinzudosiert.

Die Polyacrylate können des weiteren mit einem oder mehreren Additiven wie Alterungsschutzmitteln, Lichtschutzmitteln, Ozonschutzmitteln, Fettsäuren, Harzen, Keimbildnern, Blähmitteln, Compoundierungsmitteln und/oder Beschleunigern abgemischt sein. Bei den Alterungsschutzmitteln sei besonders auf primäre und sekundäre Alterungsschutzmittel hingewiesen, die unter den Tradenamen Irganox™ der Fa. Ciba Geigy und Hostanox™ der Fa. Clariant kommerziell erhältlich sind.

Weiterhin können sie mit einem oder mehreren Füllstoffen wie Fasern, Ruß, Zinkoxid, Titandioxid, Voll- oder Hohlglas(mikro)kugeln, Mikrokugeln aus anderen Materialien, Kieselsäure, Silikaten und Kreide versetzt sein, wobei auch der Zusatz von blockierungsfreien Isocyanaten möglich ist.

Insbesondere für die Verwendung als Haftklebemasse ist es für das erfinderische Verfahren vorteilhaft, wenn das Polyacrylat (das entstandene Polymer) bevorzugt aus der Schmelze gelfrei auf einen Träger oder auf ein Trägermaterial als Schicht aufgebracht wird.

Hierfür werden die wie im vorhergehenden beschrieben hergestellten Polyacrylate zu einer Polyacrylatmasse aufkonzentriert, deren Lösungsmittelgehalt ≤ 2 Gew.-% ist, besonders bevorzugt mit einem Lösungsmittelgehalt ≤ 0.5 Gew.-%. Dieser Prozeß findet bevorzugt in einem Aufkonzentrationsextruder statt. Die Polyacrylatmasse wird dann in einer günstigen Variante des Verfahrens als Heißschmelzmasse in Form einer Schicht auf einen Träger oder auf ein Trägermaterial aufgetragen.

Als Trägermaterialien für die Haftklebemasse, beispielsweise für Klebebänder, werden die dem Fachmann geläufigen und üblichen Materialien, wie Folien (Polyester, PET, PE, PP, BOPP, PVC), Vliese, Schäume, Gewebe und Gewebefolien sowie Trennpapier (Glassine, HDPE, LDPE) verwendet. Diese Aufzählung ist nicht abschließend.

Es ist für die Verwendung als Haftklebemasse besonders günstig, die Polyacrylate nach der Beschichtung auf den Träger oder auf das Trägermaterial zu vernetzen. Zur Herstellung der Haftklebebänder werden die oben beschriebenen Polymere hierzu optional mit Vernetzern abgemischt. Bevorzugte unter Strahlung vernetzende Substanzen gemäß dem erfinderischen Verfahren sind z.B. bi- oder multifunktionelle Acrylate oder bi- oder multifunktionelle Urethanacrylate, bi- oder multifunktionelle Isocyanate oder bi- oder multifunktionelle Epoxide. Verwendet werden können hier aber auch alle weiteren, dem Fachmann geläufigen bi- oder multifunktionellen Verbindungen, die in der Lage sind, Polyacrylate zu vernetzen.

Zur Verbesserung der Vernetzungseffizienz können die Polyacrylate gegebenenfalls mit weiteren, nicht copolymerisierten Photoinitiatoren abgemischt werden. Hierfür eignen sich bevorzugt Norrish-Typ I - und -Typ II -Spalter, wobei einige Beispiele für beide Klassen sein können Benzophenon-, Acetophenon-, Benzil-, Benzoin-, Hydroxyalkylphenon-, Phenylcyclohexylketon-, Anthrachinon-, Thioxanthon-, Triazin-, oder Fluorenonderivate, wobei diese Aufzählung keinen Anspruch auf Vollständigkeit besitzt. Ein repräsentativer Überblick wird nochmals in "Photoinitiation Photopolymerization and Photocuring, Fundamentals and Applications, von J.-P. Fouassier, Hanser Publishers, München, Wien , New York 1995" und "Chemistry & Technology of UV & EB formulation for Coatings, Inks & Paints, Volume 5, A. Carroy, C. Decker, J.P. Dowling, P. Pappas, B. Monroe, ed. By P.K.T. Oldring, publ. By SITA Technology, London, England 1994"gegeben.

Die UV-Vernetzung findet sehr bevorzugt mittels kurzzeitiger ultravioletter Bestrahlung in einem Wellenlängenbereich von 200 bis 450 nm statt, insbesondere unter Verwendung von Quecksilber-Hochdruck- oder -Mitteldruck-Lampen bei einer Leistung von 80 bis 240 W/cm. Zur UV-Vernetzung kann aber auch monochromatische Strahlung in Form von Lasern verwendet werden. Um Überhitzungen zu vermeiden, kann es angebracht sein, den UV-Strahlengang teilweise abzuschatten. Weiterhin können spezielle Reflektoren-Systeme eingesetzt werden, die als Kaltlichtstrahler fungieren um somit Überhitzungen zu vermeiden.

Es kann angebracht sein, die erfindungsgemäß beschriebenen Polyacrylate mit Elektronenstrahlen zusätzlich zu vernetzen. Typische Bestrahlungsvorrichtungen, die zum Einsatz kommen können, sind Linearkathodensysteme, Scannersysteme beziehungsweise Segmentkathodensysteme, sofern es sich um Elektronenstrahlbeschleuniger handelt. Eine ausführliche Beschreibung des Stands der Technik und der wichtigsten Verfahrensparameter findet man bei Skelhorne "Electron Beam Processing" in Vol. 1 "Chemistry & Technology of UV & EB Formulations for Coatings, Inks & Paints" publ. Sita Technology, London 1991. Die typischen Beschleunigungsspannungen liegen im Bereich zwischen 50 kV und 500 kV, vorzugsweise 80 kV bis 300 kV. Die angewandten Strahlungsdosen bewegen sich zwischen 5 bis 150 kGy, insbesondere 20 bis 100 kGy.

Im weiteren ist Gegenstand der Erfindung die Verwendung der Polyacrylathaftklebemasse für ein Klebeband, wobei die Polyacrylathaftklebemasse ein- oder beidseitig auf einem Träger aufgetragenen sein kann.

### Beispiele

### Testmethoden

Folgende Testmethoden wurden angewendet, um die klebtechnischen als auch generelle Eigenschaften der hergestellten Haftklebemassen zu evaluieren.

### 180° Klebkrafttest (Test A)

Ein 20 mm breiter Streifen einer auf Polyester als Schicht aufgetragenen Acrylathaftklebemasse wurde auf Stahlplatten aufgebracht. Der Haftklebestreifen wurde zweimal mit einem 2 kg-Gewicht auf das Substrat aufgedrückt. Das Klebeband wurde anschließend sofort mit 300 mm/min und im 180°-Winkel vom Substrat abgezogen. Die Stahlplatten wurden zuvor zweimal mit Aceton und einmal mit Isopropanol gewaschen. Die Meßergebnisse sind in N/cm angegeben und sind gemittelt aus drei Messungen. Alle Messungen wurden bei Raumtemperatur durchgeführt.

### Scherfestigkeit (Test B)

Ein 13 mm breiter Streifen des Klebebandes wurde auf eine glatte Stahloberfläche, die dreimal mit Aceton und einmal mit Isopropanol gereinigt wurde, aufgebracht. Die Auftragsfläche betrug 20 mm * 13 mm (Länge * Breite). Anschließend wurde mit 2 kg Anpreßdruck das Klebeband viermal auf den Stahlträger gedrückt. Bei 23 °C wurde ein 1 kg-Gewicht an dem Klebeband befestigt. Die gemessenen Scherstandzeiten sind in Minuten angegeben und entsprechen dem Mittelwert aus drei Messungen.

### Gelpermeationschromatographie GPC (Test C)

Die Bestimmung des mittleren Molekulargewichtes M_{w} und der Polydisperistät PD erfolgte über die Gelpermeationschromatographie. Als Eluent wurde THF mit 0,1 Vol.-% Trifluoressigsäure eingesetzt. Die Messung erfolgte bei 25 °C. Als Vorsäule wurde PSS-SDV, 5 µ, 10³ Å, ID 8,0 mm x 50 mm verwendet. Zur Auftrennung wurden die Säulen PSS-SDV, 5 µ, 10³ sowie 10⁵ und 10⁶ mit jeweils ID 8,0 mm x 300 mm eingesetzt. Die Probenkonzentration betrug 4 g/l, die Durchflußmenge 1,0 ml pro Minute. Es wurde gegen PMMA-Standards gemessen.

### Bestimmung des Gelanteils (Test D)

Die sorgfältig getrockneten lösungsmittelfreien Klebstoffproben werden in ein Vliestütchen aus Polyethylen (Tyvek-Vlies) eingeschweißt. Aus der Differenz der Probengewichte vor der Extraktion und nach der Extraktion durch Toluol wird der Gelwert, also der nicht in Toluol lösliche Gewichtsanteil des Polymers bestimmt.

### Praktische Durchführungen

### Durchführung des Hotmeltprozeßes im Meßkneter (Methode E):

Der Acrylathotmelt-Prozeß wurde in dem Meßkneter Rheomix 610p der Fa. Haake simuliert. Als Antriebseinheit stand das Gerät Rheocord RC 300p zur Verfügung. Gesteuert wurde das Gerät mit der Software PolyLab System. Der Kneter wurde jeweils mit 52 g Iösungsmittelfreier Acrylathaftklebemasse (∼80 % Füllgrad) befüllt. Die Versuche wurden bei einer Knettemperatur von 120 °C, einer Umdrehungszahl von 40 U/min und einer Knetzeit von 24 Stunden durchgeführt. Anschließend wurden die Muster über einen Hotmelt-Coater mit zwei beheizbaren Walzen auf eine 23 µm dicke mit einem Saran-Primer versehende PET-Folie mit einem Masseauftrag von 50 g/m² beschichtet.

### UV-Bestrahlung

Zur UV-Bestrahlung wurde eine UV-Anlage der Fa. Eltosch verwendet. Die Anlage ist ausgerüstet mit einem Hg-UV-Mitteldruckstrahler mit einer Intensität von 120 W/cm. Die Lappenmuster wurden jeweils mit einer Geschwindigkeit von 20 m/min durch die Anlage gefahren, wobei die Muster zur Erhöhung der Bestrahlungsdosis in mehreren Durchgängen bestrahlt wurden. Die UV-Dosis wurde mit dem Power-Puck der Fa. Eltosch gemessen. Die Dosis eines Bestrahlungsdurchganges betrug ca. 140 mJ/cm² im UV-B Bereich und 25 mJ/cm² im UV-C Bereich.

### Herstellung von Bis-2,2'-phenylethyl-thiocarbonat (Ia)

Die Synthese des Bis-2,2'-phenylethyl-thiocarbonates erfolgt ausgehend von 2-Phenylethylbromid mit Dischwefelkohlenstoff und Natriumhydroxid nach einer Vorschrift von Synth. Communications 18(13), S. 1531-1536, 1988. Ausbeute nach Destillation: 72 %. Charakterisierung: ¹H-NMR (CDCl₃) δ (ppm) : 7,20-7,40 (m, 10 H), 1,53, 1,59 (2 x d, 6 H), 3,71, 3,81 (2 x m, 2 H).

### Photoinitiatoren

Acryliertes Benzophenon ist kommerziell als Ebecryl P 36™ der Fa. UCB erhältlich. Benzoinacrylat wurde nach einer Vorschrift von Guse in US 4,144,157 hergestellt. Benzophenon ist kommerziell erhältlich von der Fa. Sigma-Aldrich.

### Herstellung der Referenzmuster

### Beispiel R1: (breite M_{w}-Verteilung; UV-Vernetzung ohne UV-Initiator)

Ein für radikalische Polymerisationen konventioneller 2 L-Glasreaktor wurde mit 20 g Acrylsäure, 380 g n-Butylacrylat und 133 g Aceton/Isopropanol (83 :17) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN hinzugegeben. Nach 4 und 8 h wurde mit jeweils 100 g Aceton/Isopropanol (83 :17) Gemisch verdünnt. Zur Reduktion der Restinitiatoren wurden nach 8 und nach 10 h jeweils 0,6 g Bis-(4-tert.-Butylcyclohexanyl)-Peroxy-dicarbonat (Perkadox 16™, Fa Akzo Nobel) hinzugegeben. Die Reaktion wurde nach 24 h Reaktionszeit abgebrochen und auf Raumtemperatur abgekühlt. Das mittlere Molekulargewicht und die Polydispersität wurden mittels Test C bestimmt.

Das Polymer wird in einem Vakuumtrockenschrank bei 80 °C und einem Druck von 10 Torr aufkonzentriert. Anschließend wurde nach Methode E vorgegangen und dann UV-vernetzt. Das Muster wurden nach den Testmethoden A, B und D ausgetestet.

### Beispiel R2: (enge M_{w}-Verteilung; UV-Vernetzung ohne UV-Initiator)

Ein für radikalische Polymerisationen konventioneller 2 L-Glasreaktor wurde mit 20 g Acrylsäure, 380 g n-Butylacrylat, 0,55 g Bis-2,2'-phenylethyl-thiocarbonat und 170 g Aceton befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN hinzugegeben. Nach 4 und 8 h wurde mit jeweils 100 g Aceton verdünnt. Die Reaktion wurde nach 48 h Reaktionszeit abgebrochen und auf Raumtemperatur abgekühlt. Das mittlere Molekulargewicht und die Polydispersität wurden mittels Test C bestimmt.

Das Polymer wurde in einem Vakuumtrockenschrank bei 80 °C und einem Druck von 10 Torr aufkonzentriert. Anschließend wurde nach Methode E vorgegangen und dann UV-vernetzt. Das Muster wurden nach den Testmethoden A, B und D ausgetestet.

### Beispiel R3: (enge M_{w}-Verteilung, freier UV-Photoinitiator)

Ein für radikalische Polymerisationen konventioneller 2 L-Glasreaktor wurde mit 20 g Acrylsäure, 380 g n-Butylacrylat, 0,55 g Bis-2,2'-phenylethyl-thiocarbonat und 170 g Aceton befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN hinzugegeben. Nach 4 und 8 h wurde mit jeweils 100 g Aceton verdünnt. Die Reaktion wurde nach 48 h Reaktionszeit abgebrochen und auf Raumtemperatur abgekühlt. Während des Abkühlens wurden 0,5 Gew.-% Benzophenon eingerührt. Das mittlere Molekulargewicht und die Polydispersität wurden mittels Test C bestimmt.

Das Polymer wurde in einem Vakuumtrockenschrank bei 80 °C und einem Druck von 10 Torr aufkonzentriert. Anschließend wurde nach Methode E vorgegangen und dann UV-vernetzt. Das Muster wurden nach den Testmethoden A, B und D ausgetestet.

### Beispiel R4: (beite Mw-Verteilung UV-Photoinitiator)

Ein für radikalische Polymerisationen konventioneller 2 L-Glasreaktor wurde mit 18 g Acrylsäure, 380 g n-Butylacrylat, 2 g acryliertem Benzophenon Ebecryl P 36™ (Fa. UCB) und 133 g Aceton/Isopropanol (83 : 17) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN hinzugegeben. Nach 4 und 8 h wurde mit jeweils 100 g Aceton/Isopropanol (83:17) Gemisch verdünnt. Zur Reduktion der Restinitiatoren wurden nach 8 und nach 10 h jeweils 0,6 g Bis-(4-tert.-Butylcyclohexanyl)-Peroxy-dicarbonat (Perkadox 16™, Fa Akzo Nobel) hinzugegeben. Die Reaktion wurde nach 24 h Reaktionszeit abgebrochen und auf Raumtemperatur abgekühlt. Das mittlere Molekulargewicht und die Polydispersität wurden mittels Test C bestimmt.

Das Polymer wurde in einem Vakuumtrockenschrank bei 80 °C und einem Druck von 10 Torr aufkonzentriert. Anschließend wurde nach Methode E vorgegangen und dann UV-vernetzt. Das Muster wurden nach den Testmethoden A, B und D ausgetestet.

### Beispiel R5: (breite M_{w}-Verteilung UV-Photoinitiator)

Ein für radikalische Polymerisationen konventioneller 2 L-Glasreaktor wurde mit 18 g Acrylsäure, 380 g n-Butylacrylat, 2 g Benzoinacrylat und 133 g Aceton/Isopropanol (83 : 17) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN hinzugegeben. Nach 4 und 8 h wurde mit jeweils 100 g Aceton/Isopropanol (83 : 17) Gemisch verdünnt. Zur Reduktion der Restinitiatoren wurden nach 8 und nach 10 h jeweils 0,6 g Bis-(4-tert.-Butylcyclohexanyl)-Peroxy-dicarbonat (Perkadox 16™, Fa Akzo Nobel) hinzugegeben. Die Reaktion wurde nach 24 h Reaktionszeit abgebrochen und auf Raumtemperatur abgekühlt. Das mittlere Molekulargewicht und die Polydispersität wurden mittels Test C bestimmt.

Das Polymer wurde in einem Vakuumtrockenschrank bei 80 °C und einem Druck von 10 Torr aufkonzentriert. Anschließend wurde nach Methode E vorgegangen und dann UV-vernetzt. Das Muster wurden nach den Testmethoden A, B und D ausgetestet.

### Beispiel R6: (breite M_{w}-Verteilung; UV-Photoinitiator)

Ein für radikalische Polymerisationen konventioneller 2 L-Glasreaktor wurde mit 18 g Acrylsäure, 380 g n-Butylacrylat, 2 g acryliertem Benzophenon Ebecryl P 36™ (Fa. UCB) und 266 g Aceton/Isopropanol (83 : 17) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN hinzugegeben. Nach 4 und 8 h wurde mit jeweils 100 g Aceton/Isopropanol (83 : 17) Gemisch verdünnt. Zur Reduktion der Restinitiatoren wurden nach 8 und nach 10 h jeweils 0,6 g Bis-(4-tert.-Butylcyclohexanyl)-Peroxy-dicarbonat (Perkadox 16™, Fa Akzo Nobel) hinzugegeben. Die Reaktion wurde nach 24 h Reaktionszeit abgebrochen und auf Raumtemperatur abgekühlt. Das mittlere Molekulargewicht und die Polydispersität wurden mittels Test C bestimmt.

Das Polymer wurde in einem Vakuumtrockenschrank bei 80 °C und einem Druck von 10 Torr aufkonzentriert. Anschließend wurde nach Methode E vorgegangen und dann UV-vernetzt. Das Muster wurden nach den Testmethoden A, B und D ausgetestet.

### Beispiel R7: (breite Mw-Verteilung UV-Photoinitiator)

Ein für radikalische Polymerisationen konventioneller 2 L-Glasreaktor wurde mit 18 g Acrylsäure, 380 g n-Butylacrylat, 2 g Benzoinacrylat und 266 g Aceton/Isopropanol (83 : 17) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN hinzugegeben. Nach 4 und 8 h wurde mit jeweils 100 g Aceton/Isopropanol (83 : 17) Gemisch verdünnt. Zur Reduktion der Restinitiatoren wurden nach 8 und nach 10 h jeweils 0,6 g Bis-(4-tert.-Butylcyclohexanyl)-Peroxy-dicarbonat (Perkadox 16™, Fa Akzo Nobel) hinzugegeben. Die Reaktion wurde nach 24 h Reaktionszeit abgebrochen und auf Raumtemperatur abgekühlt. Das mittlere Molekulargewicht und die Polydispersität wurden mittels Test C bestimmt.

Das Polymer wurde in einem Vakuumtrockenschrank bei 80 °C und einem Druck von 10 Torr aufkonzentriert. Anschließend wurde nach Methode E vorgegangen und dann UV-vernetzt. Das Muster wurden nach den Testmethoden A, B und D ausgetestet.

### Beispiel 1: (enge M_{w}-Verteilung, UV-Photoinitiator)

Ein für radikalische Polymerisationen konventioneller 2 L-Glasreaktor wurde mit 18 g Acrylsäure, 380 g n-Butylacrylat, 2 g acryliertem Benzophenon Ebecryl P 36™ (Fa. UCB), 0,55 g Bis-2,2'-phenylethyl-thiocarbonat und 170 g Aceton befüllt. Nach 45 Minuten Durchleiten von Stickstoffgas unter Rühren wurde der Reaktor auf 58 °C hochgeheizt und 0,3 g Azoisobutyronitril (AIBN, Vazo 64™, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,3 g AIBN hinzugegeben. Nach 4 und 8 h wurde mit jeweils 100 g Aceton verdünnt. Die Reaktion wurde nach 48 h Reaktionszeit abgebrochen und auf Raumtemperatur abgekühlt. Das mittlere Molekulargewicht und die Polydispersität wurden mittels Test C bestimmt.

Das Polymer wurde in einem Vakuumtrockenschrank bei 80°C und einem Druck von 10 Torr aufkonzentriert. Anschließend wurde nach Methode E vorgegangen und dann UV-vernetzt. Das Muster wurden nach den Testmethoden A, B und D ausgetestet.

### Beispiel 2: (enge M_{w}-Verteilung, UV-Photoinitiator)

Ein für radikalische Polymerisationen konventioneller 2 L-Glasreaktor wurde mit 18 g Acrylsäure, 380 g n-Butylacrylat, 2 g Benzoinacrylat, 0,55 g Bis-2,2'-phenylethyl-thiocarbonat und 133 g Aceton befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN hinzugegeben. Nach 4 und 8 h wurde mit jeweils 100 g Aceton verdünnt. Die Reaktion wurde nach 48 h Reaktionszeit abgebrochen und auf Raumtemperatur abgekühlt. Das mittlere Molekulargewicht und die Polydispersität wurden mittels Test C bestimmt.

Das Polymer wurde in einem Vakuumtrockenschrank bei 80 °C und einem Druck von 10 Torr aufkonzentriert. Anschließend wurde nach Methode E vorgegangen und dann UV-vernetzt. Das Muster wurden nach den Testmethoden A, B und D ausgetestet.

### Beispiel 3: (enge M_{w}-Verteilung, UV-Photoinitiator)

Ein für radikalische Polymerisationen konventioneller 2 L-Glasreaktor wurde mit 18 g Acrylsäure, 380 g n-Butylacrylat, 2 g acryliertem Benzophenon Ebecryl P 36™ (Fa. UCB), 0,55 g Bis-2,2'-phenylethyl-thiocarbonat und 266 g Aceton befüllt. Nach 45 Minuten Durchleiten von Stickstoffgas unter Rühren wurde der Reaktor auf 58 °C hochgeheizt und 0,3 g Azoisobutyronitril (AIBN, Vazo 64™ , Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,3 g AIBN hinzugegeben. Nach 4 und 8 h wurde mit jeweils 100 g Aceton verdünnt. Die Reaktion wurde nach 48 h Reaktionszeit abgebrochen und auf Raumtemperatur abgekühlt. Das mittlere Molekulargewicht und die Polydispersität wurden mittels Test C bestimmt.

Das Polymer wurde in einem Vakuumtrockenschrank bei 80 °C und einem Druck von 10 Torr aufkonzentriert. Anschließend wurde nach Methode E vorgegangen und dann UV-vernetzt. Das Muster wurden nach den Testmethoden A, B und D ausgetestet.

### Beispiel 4: (enge M_{w}-Verteilung, UV-Photoinitiator)

Ein für radikalische Polymerisationen konventioneller 2 L-Glasreaktor wurde mit 18 g Acrylsäure, 380 g n-Butylacrylat, 2 g Benzoinacrylat, 0,55 g Bis-2,2'-phenylethyl-thiocarbonat und 170 g Aceton befüllt. Nach 45 Minuten Durchleiten von Stickstoffgas unter Rühren wurde der Reaktor auf 58 °C hochgeheizt und 0,3 g Azoisobutyronitril (AIBN, Vazo 64™, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,3 g AIBN hinzugegeben. Nach 4 und 8 h wurde mit jeweils 100 g Aceton verdünnt. Die Reaktion wurde nach 48 h Reaktionszeit abgebrochen und auf Raumtemperatur abgekühlt. Das mittlere Molekulargewicht und die Polydispersität wurden mittels Test C bestimmt.

Das Polymer wurde in einem Vakuumtrockenschrank bei 80 °C und einem Druck von 10 Torr aufkonzentriert. Anschließend wurde nach Methode E vorgegangen und dann UV-vernetzt. Das Muster wurden nach den Testmethoden A, B und D ausgetestet.

### Beispiel 5: (enge M_{w}-Verteilung, UV-Photoinitiator)

Ein für radikalische Polymerisationen konventioneller 2 L-Glasreaktor wurde mit 38 g Acrylsäure, 360 g 2-Ethylhexylacrylat, 2 g Benzoinacrylat, 0,55 g Bis-2,2'-phenylethylthiocarbonat und 133 g Aceton befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN hinzugegeben. Nach 4 und 8 h wurde mit jeweils 100 g Aceton verdünnt. Die Reaktion wurde nach 48 h Reaktionszeit abgebrochen und auf Raumtemperatur abgekühlt. Das mittlere Molekulargewicht und die Polydispersität wurden mittels Test C bestimmt.

Das Polymer wurde in einem Vakuumtrockenschrank bei 80 °C und einem Druck von 10 Torr aufkonzentriert. Anschließend wurde nach Methode E vorgegangen und dann UV-vernetzt. Das Muster wurden nach den Testmethoden A, B und D ausgetestet.

### Beispiel 6: (enge M_{w}-Verteilung, UV-Photoinitiator)

Ein für radikalische Polymerisationen konventioneller 2 L-Glasreaktor wurde mit 16 g Acrylsäure, 191 g 2-Ethylhexylacrylat, 191 g n-Butylacrylat, 2 g Benzoinacrylat, 0,55 g Bis-2,2'-phenylethyl-thiocarbonat und 133 g Aceton befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN hinzugegeben. Nach 4 und 8 h wurde mit jeweils 100 g Aceton verdünnt. Die Reaktion wurde nach 48 h Reaktionszeit abgebrochen und auf Raumtemperatur abgekühlt. Das mittlere Molekulargewicht und die Polydispersität wurden mittels Test C bestimmt.

Das Polymer wurde in einem Vakuumtrockenschrank bei 80 °C und einem Druck von 10 Torr aufkonzentriert. Anschließend wurde nach Methode E vorgegangen und dann UV-vernetzt. Das Muster wurden nach den Testmethoden A, B und D ausgetestet.

### Resultate

Als Referenzmuster wurden die Beispiele R1, R4, R5, R6 und R7 hergestellt. Alle diese Referenzmuster wurden konventionell in einem Aceton/Isopropanol Gemisch polymerisiert, wobei durch den Mengenanteil an Isopropanol das mittlere Molekulargewicht M_{w} eingestellt wurde. Die Referenz R1 enthält keinen UV-Photoinitiator. Die Beispiele R4 und R5 verdeutlichen den Einfluß der breiten Molekulargewichtsverteilung in Kombination mit copolymerisierten UV-Photoinitiatoren, wie z. B. einem acryliertem Benzophenon oder Benzoinacrylat. In den Referenzen R6 und R7 wurde das Molekulargewicht weiter herabgesetzt und wiederum die Kombination copolymerisierter Photoinitiator mit breiter Molekulargewichtsverteilung untersucht. Hiermit konnte ein Molekulargewichtseinfluß ausgeschlossen werden.

Weiterhin wurden die Referenzen R2 und R3 hergestellt. Beide Polymere wurden über eine kontrollierte radikalische Polymerisation mit einem Trithiocarbonat als Regler hergestellt. Referenz R2 enthält keinen UV-Photoinitiator und zeigt, daß der eingesetzte Regler nicht als UV-Photoinitator fungiert. Referenz 3 wurde nach der gleichen Methode hergestellt, nur daß hier ein freier UV-Photoinitator beigemischt wurde. Benzophenon besitzt die gleiche Grundstruktur wie Ebecryl P36™ (Fa UCB), ist aber nach dem Mischprozeß nicht fest an der Polymerkette gebunden. Mit dieser Referenz wurde untersucht, welchen Effizienz der copolymerisierte Photoinitiator in Kombination mit dem copolymerisiertem Trithiocarbonat besitzt.

Für das erfindungsgemäße Verfahren sind die Beispiele 1 bis 6 angefügt. Mit den Beispielen 1 und 2 wurden engverteilte Acrylathaftklebemassen mit einem Trithiocarbonat als Regler und mit zwei unterschiedlichen copolymerisierten Photoinitiatoren hergestellt. In den Beispielen 3 und 4 wurde analog vorgegangen, nur daß - in Anlehnung an die Referenzen R6 und R7 - das mittlere Molekulargewicht weiter herabgesetzt wurde und somit der Molekulargewichtseinfluß untersucht wird. In den Beispielen 5 und 6 wurde die Comonomerzusammensetzung verändert, hierdurch konnte belegt werden, daß das erfindungsgemäße Verfahren für unterschiedliche Acrylathaftklebemassen eingesetzt werden kann.

In der folgenden Tabelle 1 sind zunächst die Ergebnisse der Polymerisationen zusammengestellt:

| Tabelle 1 | | |
|---|---|---|
| Beispiel | M_{W} [g/mol] | Polydispersität PD |
| R1 | 381.000 | 4.7 |
| R2 | 365.000 | 2.1 |
| R3 | 365.000 | 2.1 |
| R4 | 402.000 | 5.1 |
| R5 | 386.000 | 4.5 |
| R6 | 256.000 | 4.2 |
| R7 | 217000 | 5.8 |
| 1 | 378.000 | 2.2 |
| 2 | 389.000 | 2.0 |
| 3 | 241.000 | 1.9 |
| 4 | 238.000 | 1.5 |
| 5 | 374.000 | 1.8 |
| 6 | 376.000 | 1.9 |

| | | |
|---|---|---|
| M_{W}: mittleres Molekulargewicht aus GPC PD: M_{W}/M_{N} = Polydispersität aus GPC | | |

Aus Tabelle 1 ist ersichtlich, daß die kontrolliert geführten radikalischen Polymerisationen eine bedeutend engere Molekulargewichtsverteilung (PD) liefern. Die Polymerisationen wurden so geführt, daß die erzielten Molekulargewichtsbereiche miteinander vergleichbar sind. Dies gilt insbesondere für den Vergleich breite versus enge Molekulargewichtsverteilung.

In der folgenden Tabelle 2 wurden die Beispiele zu Haftklebebandmustern verarbeitet, mit UV-Strahlung vernetzt und anschließend klebtechnisch ausgeprüft. Für die Effizienz der Vernetzung ist insbesondere der Gelwert ein entscheidendes Kriterium.

| Tabelle 2 | | | | |
|---|---|---|---|---|
| Beispiel | UV-Bestrahlung; Anzahl der Durchgänge | SSZ 10°C, 10 N [min] | KK-Stahl, [N/cm] | Gelwert [%] |
| R1 | 1 | 1 | 4.4 | 0 |
| R1 | 2 | 2 | - 4.7 | 0 |
| R2 | 1 | 1 | 4.5 | 0 |
| R2 | 2 | 2 | 4.7 | 0 |
| R3 | 1 | 5 | 7.1 | 3 |
| R3 | 2 | 11 | 5.5 | 17 |
| R4 | 1 | 171 | 4.3 | 29 |
| R4 | 2 | 102 | 3.7 | 43 |
| R5 | 1 | 6 | 5.4 | 13 |
| R5 | 2 | 73 | 4.1 | 42 |
| R6 | 1 | 163 | 5.4 | 23 |
| R6 | 2 | 123 | 3.9 | 40 |
| R7 | 1 | 1 | 8.0 | 3 |
| R7 | 2 | 19 | 5.4 | 23 |
| 1 | 1 | 78 | 5.4 | 37 |
| 1 | 2 | 139 | 3.9 | 63 |
| 2 | 1 | 104 | 4.5 | 53 |
| 2 | 2 | 93 | 3.2 | 69 |
| 3 | 1 | 98 | 4.5 | 35 |
| 3 | 2 | 130 | 3.2 | 60 |
| 4 | 1 | 221 | 4.8 | 42 |
| 4 | 2 | 216 | 3.6 | 64 |
| 5 | 1 | 2256 | 4.5 | 45 |
| 5 | 2 | 1674 | 4.1 | 68 |
| 6 | 1 | 365 | 4.8 | 41 |
| 6 | 2 | 322 | 4.2 | 65 |

| | | | | |
|---|---|---|---|---|
| SSZ: Scherstandzeit RT: Raumtemperatur KK: Klebkraft Masseauftrag 50 g/m² | | | | |

Der Tabelle 2 ist zu entnehmen, daß das Referenzmuster R 1 mit einer breiten Molekulargewichtsverteilung und ohne Photoinitiator nicht meßbar vernetzt. Sowohl mit einem als auch mit 2 Strahlendurchgängen wird kein Gelwert gemessen. Die klebtechnischen Eigenschaften zeigen, daß das entsprechende Haftklebeband keine Kohäsion besitzt und während der Klebkraftmessung kohäsiv spaltet.

Führt man die Polymerisation in Gegenwart eines Trithiocarbonates durch und erreicht ein vergleichbares Molekulargewicht, so ändert sich nichts am Vernetzungsverhalten. Es kann nach UV-Bestrahlung immer noch kein Gelwert gemessen werden und die Muster spalten während der klebtechnischen Ausprüfung kohäsiv. Copolymerisierte Trithiocarbonate können somit nicht als UV-Photoinitiatoren für Acrylathaftklebemassen eingesetzt werden. Setzt man diesem Polymerisat einen freien UV-Photoinitiator hinzu (Referenzbeispiel 3), so verbessert sich das Vernetzungsverhalten, wenn auch die erzielten Gelwerte unterhalb derer konventioneller Acrylathaftklebemassen mit copolymerisierten UV-Photoinitiatoren liegen. So werden z.B. nach 2 UV-Durchgängen 17 % Gelwert gemessen, wobei dieser Wert für Haftklebemassen noch deutlich zu gering sind. Der optimale Bereich liegt bei einem Gelwert von 50 %. Die klebtechnischen Eigenschaften belegen dies. Besonders die Scherfestigkeit ist noch deutlich zu gering.

Die Referenzbeispiele R4 und R5 sind Referenzen für konventionelle UV-vernetzbare Acrylathaftklebemassen mit einem copolymerisierten UV-Photoinitiator und einer breiten Molekulargewichtsverteilung. Durch die unterschiedlichen copolymerisierten Photoinitiatoren lassen sich diese Haftklebemassen schon bedeutend besser vernetzen. Der Vergleich mit den analogen Mustern mit enger Molekulargewichtsverteilung (Beispiel 1 und 2) verdeutlicht aber, daß die Vernetzungseffizienz der Referenzbeispiele noch bedeutend geringer ist. So wird für Referenzbeispiel R4 nach einem UV-Durchgang ein Gelwert von 29 % und nach zwei Durchgängen von 43 % gemessen. Das dagegen erfindungsgemäße Polymer Beispiel 1 weist nach einem Bestrahlungsdurchgang einen Gelwert von 37 % und nach zwei Durchgängen von 63 % auf. Vergleicht man das Referenzbeispiel R5 mit Beispiel 2, so findet man nach einem UV-Durchgang 13 % versus 53 % und nach zwei Durchgängen 42 % versus 69 %.

Bezugnehmend auf die Vernetzungseffizienz besteht somit ein synergistischer Effekt aus enger Molekulargewichtsverteilung, copolymerisiertem UV-Photoinitiator und Trithiocarbonatfunktion innerhalb des Polyacrylates. Dieser Effekt konnte nicht erwartet werden. Wenn man nun die klebtechnischen Eigenschaften vergleicht, so kann zum einen nur die Paare R4 und Beispiel 1 sowie R5 und Beispiel 2 bei etwa gleichem Gelwert miteinander vergleichen, da sowohl die Scherfestigkeit als auch die Klebkraft vom Vernetzungsgrad abhängig sind. In der Regel sinkt mit steigendem Gelwert (Vernetzungsgrad) die Klebkraft, für den regulären Fall, daß sich das Haftklebeband adhäsiv vom Substrat löst. Bei der Scherfestigkeit verhält es sich genau invers. Mit steigendem Gelwert steigt zunächst auch die Scherfestigkeit, bis letztendlich das Polymer dermassen übervernetzt ist und sich die Probe adhäsiv im Schertest vom Substrat löst.

Vergleicht man nun die Klebkräfte des Referenzbeispiels R4 mit Beispiel 1, so fällt auf, dass R4 bei einem Gelwert von 43 % mit 3,7 N/cm eine relativ geringe Klebkraft aufweist. Die Klebkräfte des Beispiels 4 liegen bei einem Gelwert von 37 % mit 5.4 N/cm und 63 % mit 3,9 N/cm deutlich höher. Dies könnte ein Effekt der engen Molekulargewichtsverteilung sein. Bezugnehmend auf die Scherfestigkeit lassen sich keine Aussagen treffen, da hier die Unterschiede sehr gering sind und im Vergleich die Scherfestigkeit mit steigendem Gelwert zunimmt. Vergleicht man Beispiel R5 mit 2, so kann man einen Vergleich von Gelwert 42 % (R5) mit 53 % (2) durchführen. Bezüglich der Klebkraft ergibt sich wiederum der gleiche Trend: Die enger verteilte Haftklebemasse besitzt bei einem Gelwert von 53 % eine Klebkraft von 4,5 N/cm, die breit verteilte bei einem niedrigeren Gelwert eine Klebkraft von 4,1 N/cm. Somit zeigt sich auch in diesem Vergleich, daß die engverteilte Haftklebemasse eine höhere Klebkraft besitzt, obwohl der Gelwert höher ist und die Masse somit weniger stark auf das Substrat auffließen sollte.

Zur weiteren Verifizierung wurde eine Molekulargewichtsreduzierung vorgenommen. Als Referenzen wurden die Beispiele R6 und R7 hergestellt. Durch die Absenkung des Molekulargewichtes waren diese noch weniger effizient durch UV-Strahlung zu vernetzen als die höhermolekularen Referenzmuster R4 und R5. Der Erfindung gemäß wurden dann die Beispiele 3 und 4 synthetisiert und mit den Referenzen verglichen. Der Vergleich der Gelwerte belegt wiederum, daß die Beispiele 3 und 4 gegenüber den Referenzen R6 und R7 bei allen UV-Dosen einen deutlich höheren Gelwert aufweisen. Auch ein Vergleich der Klebkräfte zeigt wiederum, daß im Vergleich von R6 mit 3 die engverteilte Haftklebemasse wiederum eine höhere Klebkraft besitzt, wenn auch der Gelwert um 5 % niedriger liegt. Betrachtet man dagegen die Scherfestigkeit des Beispiels 4, so werden hier für diese Comonomerzusammensetzung die höchsten Scherfestigkeiten gemessen. Dies könnte wiederum ein Indiz dafür sein, daß auch eine enge Molekulargewichtsverteilung für scherfestere Massen zu bevorzugen ist.

Mit den Beispielen 5 und 6 wurden zwei weitere erfindungsgemäße Polyacrylate mit unterschiedlicher Comonomerzusammensetzung hergestellt. Die polarere Zusammensetzung beweist, daß auch UV-vernetzbare Haftklebemassen mit hoher Kohäsion zugänglich sind.

## Patentansprüche

1. Polyacrylathaftklebemasse, **gekennzeichnet durch**
- ein mittleres Molekulargewicht M_{w} (Gewichtsmittel) von 100.000 bis 600.000 g/mol
- eine Polydispersität von nicht mehr als 3,0
- einpolymerisierte Photoinitiatoreinheiten.

2. Polyacrylathaftklebemasse nach Anspruch 1, **gekennzeichnet durch**
die Beimischung von einem oder mehrerer Harze, bevorzugt in Anteilen von bis 50 Gew.%, sehr bevorzugt von 20 bis 40 Gew.-%.

3. Polyacrylathaftklebemasse nach Anspruch 1, **gekennzeichnet durch**
zugesetzte Additive, wie Alterungsschutzmittel, Lichtschutzmittel, Ozonschutzmittel, Fettsäuren, Weichmacher, Keimbildner, Blähmittel, Beschleuniger und/oder Füllmittel.

4. Verfahren zur Herstellung einer UV-vernetzbaren Polyacrylathaftklebemasse mit einer Polydispersität von nicht mehr als 3,0, **gekennzeichnet durch**
einen radikalischen Polymerisationsprozeß zur Herstellung eines Polymers aus einer Monomermischung,
bei welchem die zu polymerisierende Monomermischung copolymerisierbare Photoinitiatoren enthält,
wobei der Polymerisationsprozeß **durch** die Anwesenheit zumindest einer chemischen Verbindung enthaltend die Einheit 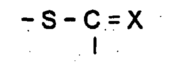 als Polymerisationsregler geregelt wird, wobei X = S, O oder N.

5. Verfahren nach Anspruch 4, wobei Trithiocarbonate oder Dithioester als Polymerisationsregler eingesetzt werden.

6. Verfahren nach zumindest einem der vorangehenden Ansprüche, **dadurch gekennzeichnet, daß**
das Polymer nach der Polymerisation zum Hotmelt aufkonzentriert wird mit einem Restlösemittelanteil von < 2 %, bevorzugt <1 %, sehr bevorzugt < 0.5 %, das Polymer aus der Schmelze gelfrei (Kriterien) auf einen Träger beschichtet wird.

7. Verfahren nach zumindest einem der vorangehenden Ansprüche, **dadurch gekennzeichnet, daß**
das Polymer durch UV-Strahlung vernetzt wird, insbesondere nach der Beschichtung auf einen Träger, und wobei insbesondere die UV-Vernetzung durch den zugesetzten Polymerisationsregler unterstützt wird.

8. Verfahren nach zumindest einem der vorangehenden Ansprüche, **dadurch gekennzeichnet, daß**
vor und/oder während der Polymerisation thermisch zerfallende radikalbildende Initiatoren zugegeben werden, insbesondere Azo- und/oder Peroxo-Initiatoren, wobei die Zugabe mindestens in zwei Verfahrensstufen erfolgt.

9. Verfahren zur Herstellung von Acrylathaftklebemassen, **dadurch gekennzeichnet, daß** die Monomermischung zumindest die folgenden Komponenten beinhaltet:
(a) 68 -99.9 Gew.-%, insbesondere 75 - 99.5 Gew.-%, Acrylsäureester und/oder Methacrylsäureester und/oder deren freie Säuren mit der folgenden Formel
CH₂=C(R₁)(COOR₂),
wobei R₁ = H oder CH₃ und R₂ eine Alkylkette mit 1 bis 30 C-Atomen oder H ist,
(b) 0.05 - 2 Gew.-%, insbesondere 0.4 - 1 Gew.-% copolymerisierbare UV-Photoinitiatoren mit einer radikalisch zu polymerisierenden Doppelbindung.

10. Verfahren nach zumindest einem der vorangehenden Ansprüche, **dadurch gekennzeichnet, daß**
die Monomermischung weiterhin die Komponente
(c) bis zu 30 Gew.-% olefinisch ungesättigte Monomere mit funktionellen Gruppen beinhaltet.

11. Verwendung der Polyacrylathaftklebemasse nach einem der Ansprüche 1 bis 3 oder der nach einem Verfahren gemäß einem der Ansprüche 4 bis 10 hergestellten Polyacrylathaftklebemase für ein ein- oder doppelseitiges Haftklebeband.

## Claims

1. Polyacrylate pressure sensitive adhesive **characterized by**
- an average molecular weight M_{w} (weight average) of from 100 000 to 600 000 g/mol
- a polydispersity of not more than 3.0
- copolymerized photoinitiator units.

2. Polyacrylate pressure sensitive adhesive according to Claim 1, **characterized by** admixture of one or more resins, preferably in fractions of up to 50% by weight, very preferably from 20 to 40% by weight.

3. Polyacrylate pressure sensitive adhesive according to Claim 1, **characterized by** added additives, such as aging inhibitors, light stabilizers, ozone protectants, fatty acids, plasticizers, nucleators, blowing agents, accelerators and/or fillers.

4. Process for preparing a UV-crosslinkable polyacrylate pressure sensitive adhesive having a polydispersity of not more 3.0, **characterized by**
a radical polymerization process for preparing a polymer from a monomer mixture,
the monomer mixture to be polymerized comprising copolymerizable photoinitiators,
the polymerization process being regulated by the presence of at least one chemical compound comprising the unit 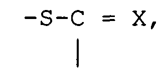 in which X is S, O or N.

5. Process according to Claim 4, where trithiocarbonates or dithioesters are used as polymerization regulators.

6. Process according to either of the preceding claims, **characterized in that** following polymerization the polymer is concentrated to a hotmelt with a residual solvent fraction of < 2%, preferably < 1%, very preferably < 0.5% and the polymer is coated from the melt, gel-free (criteria), onto a backing.

7. Process according to at least one of the preceding claims, **characterized in that** the polymer is crosslinked by UV radiation, in particular following coating onto a backing, and in particular UV crosslinking is assisted by the added polymerization regulator.

8. Process according to at least one of the preceding claims, **characterized in that** before and/or during the polymerization thermally decomposing, radical-forming initiators are added, especially azo and/or peroxo initiators, the addition taking place in at least two process stages.

9. Process for preparing acrylate pressure sensitive adhesives, **characterized in that** the monomer mixture comprises at least the following components:
(a) 68-99.9% by weight, especially 75-99.5% by weight, of acrylates and/or methacrylates and/or their free acids with the following formula
CH₂ = C(R₁) (COOR₂),
where R₁ is H or CH₃ and R₂ is an alkyl chain having from 1 to 30 carbon atoms or H,
(b) 0.05-2% by weight, especially 0.4-1% by weight, of copolymerizable UV photoinitiators containing a radically polymerizable double bond.

10. Process according to at least one of the preceding claims, **characterized in that** the monomer mixture further comprises component
(c) up to 30% by weight of olefinically unsaturated monomers containing functional groups.

11. Use of the polyacrylate pressure sensitive adhesive according to any of Claims 1 to 3 or of the polyacrylate pressure sensitive adhesive prepared by a process according to any of Claims 4 to 10 for a single-sided or double-sided pressure sensitive adhesive tape.

## Revendications

1. Composition adhésive autocollante de polyacrylate **caractérisée par** :
- un poids moléculaire moyen M_{w} (moyenne en poids) de 100 000 à 600 000 g/mol,
- une polydispersité d'au plus 3,0,
- des motifs photoamorceurs incorporés par polymérisation.

2. Composition adhésive autocollante de polyacrylate selon la revendication 1, **caractérisée par** le mélangeage d'une ou de plusieurs résines, de préférence en des proportions allant jusqu'à 50 % en poids, très préférablement de 20 à 40 % en poids.

3. Composition adhésive autocollante de polyacrylate selon la revendication 1, **caractérisée par** des additifs ajoutés, tels que des agents de protection contre le vieillissement, des agents photo-protecteurs, des agents de protection contre l'ozone, des acides gras, des agents plastifiants, des agents de nucléation, des agents gonflants, des accélérateurs et/ou des charges.

4. Procédé de préparation d'une composition adhésive autocollante de polyacrylate réticulable par UV présentant une polydispersité d'au plus 3,0, **caractérisé par** :
un processus de polymérisation radicalaire pour la préparation d'un polymère à partir d'un mélange de monomères,
dans lequel le mélange de monomères à polymériser contient des photoamorceurs copolymérisables,
où le processus de polymérisation est régulé par la présence d'au moins un composé chimique renfermant le motif 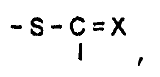 en tant que régulateur de polymérisation, dans lequel X représente un atome de soufre, un atome d'oxygène ou un atome d'azote.

5. Procédé selon la revendication 4, dans lequel des trithiocarbonates ou des dithioesters sont utilisés en tant que régulateurs de polymérisation.

6. Procédé selon au moins l'une des revendications précédentes, **caractérisé en ce que** :
après la polymérisation, le polymère est concentré en une masse thermofusible avec une proportion de solvant résiduel < 2 %, de préférence < 1 %, très préférablement < 0,5 %, et le polymère est appliqué sur un support à partir de la masse fondue sans gel (critères).

7. Procédé selon au moins l'une des revendications précédentes, **caractérisé en ce que** :
le polymère est réticulé par irradiation par UV, en particulier après l'application sur un support, et où, en particulier, la réticulation par UV est assistée par le régulateur de polymérisation ajouté.

8. Procédé selon au moins l'une des revendications précédentes, **caractérisé en ce que** :
avant et/ou durant la polymérisation, des amorceurs formant des radicaux, à décomposition thermique, sont ajoutés, en particulier des amorceurs azoïques et/ou peroxo, où l'addition est effectuée au moins en deux étapes de procédé.

9. Procédé de préparation de compositions adhésives autocollantes d'acrylate, **caractérisé en ce que** le mélange de monomères comprend au moins les composants suivants :
(a) de 68 à 99,9 % en poids, en particulier de 75 à 99,5 % en poids, d'esters de l'acide acrylique et/ou d'esters de l'acide méthacrylique et/ou de leurs acides libres de formule suivante :
CH₂ = C(R₁) (COOR₂)
dans laquelle R₁ représente un atome d'hydrogène ou un groupe CH₃ et R₂ représente une chaîne alkyle renfermant de 1 à 30 atomes de carbone ou un atome d'hydrogène,
(b) de 0,05 à 2 % en poids, en particulier de 0,4 à 1 % en poids, de photoamorceurs à UV copolymérisables renfermant une double liaison à polymériser par voie radicalaire.

10. Procédé selon au moins l'une des revendications précédentes, **caractérisé en ce que** :
le mélange de monomères comprend, en outre, le composant :
(c) jusqu'à 30 % en poids de monomères oléfiniquement insaturés renfermant des groupes fonctionnels.

11. Utilisation de la composition adhésive autocollante de polyacrylate selon l'une quelconque des revendications 1 à 3 ou de la composition adhésive autocollante de polyacrylate préparée conformément à un procédé selon l'une quelconque des revendications 4 à 10 pour un ruban adhésif autocollant à une ou deux faces.
